# EUROPÄISCHE PATENTANMELDUNG

(11) **EP 1 206 140 A2**
(43) Veröffentlichungstag der Anmeldung: **15.05.2002**
(21) Anmeldenummer: 01440375.2
(22) Anmeldetag: 08.11.2001
(51) Int. Cl.: H04N 7/173, H04N 7/10, H04N 7/22

(54) **Gestell, insbesondere für Kabelfernsehen**

(30) Priorität: 11.11.2000 DE 10056056
(71) Anmelder: ALCATEL, 75008 Paris (FR); FUBA Communications Systems GmbH, 31162 Bad Salzdetfurth (DE)
(72) Erfinder: Berger, Werner, D-71254 Ditzingen (DE); Weiss Dr. Friedemann, D-71116 Gärtringen (DE); Stascheit, Bernhard, D-38118 Braunschweig (DE)
(74) Vertreter: Brose, Gerhard

(57) **Zusammenfassung**

Es wird ein Gestell, insbesondere für Kabelfernsehen, mit einer Vielzahl von Baugruppen beschrieben, deren Ein- und Ausgänge mit Kabeln zur Übertragung von Hochfrequenzsignalen und von Steuersignalen verbunden sind. Die Baugruppen (2) sind über die gemeinsamen Ein- und Ausgänge durch Koaxialkabel (3) verbunden, die sowohl Hochfrequenzsignale wie auch codierte Steuersignale führen.

## Beschreibung

Die Erfindung betrifft ein Baugruppengestell nach dem Oberbegriff des Anspruchs 1.

Die Erfindung liegt auf dem Gebiet der breitbandigen Hochfrequenzübertragung insbesondere der HFC (hybrid fiber coax) Übertragung für CATV Systeme.

Es ist bekannt, in Hochfrequenzübertragungssystemen Koaxialkabel für die Verbindung der Ein- und Ausgänge von Baugruppen zu verwenden. Diese Kabel führen breitbandige analoge Hochfrequenzsignale. Üblicherweise sind weitere Kabelverbindungen (digital bus) vorgesehen, welche digitale Signale für das Management des Hochfrequenzübertragungssystems beispielsweise Redundanz, Identifizierungszwecke etc. übertragen. Auch diese Verbindungen können durch Koaxialkabel hergestellt werden.

Die Verwendung von zwei Kabeln zur Verbindung der unterschiedlichen Baugruppen miteinander zieht erhöhte Kosten nach sich. Darüberhinaus wird der Verkabelungsaufwand erhöht, und die Verkabelung im Gestell unübersichtlich.

Der vorliegenden Erfindung liegt von daher die Aufgabe zugrunde, die Kosten und den Verkabelungsaufwand für derartige Gestelle zu verringern und die Verkabelung innerhalb des Gestells übersichtlicher zu gestalten.

Diese Aufgabe wird durch die im Kennzeichen des Anspruchs 1 erfaßten Merkmale gelöst.

Weitere vorteilhafte Ausgestaltungen der Erfindung sind in den Unteransprüchen erfaßt.

Neben den sich aus der Aufgabenstellung direkt ergebenden Vorteilen weist die Erfindung noch den Vorteil auf, daß das bisher zusätzlich verwendete Kabel in besonders einfacher Weise durch eine auf den Baugruppen vorgesehene Schaltung ersetzt ist.

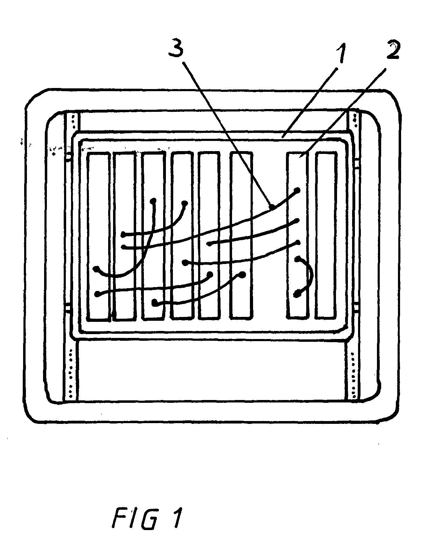

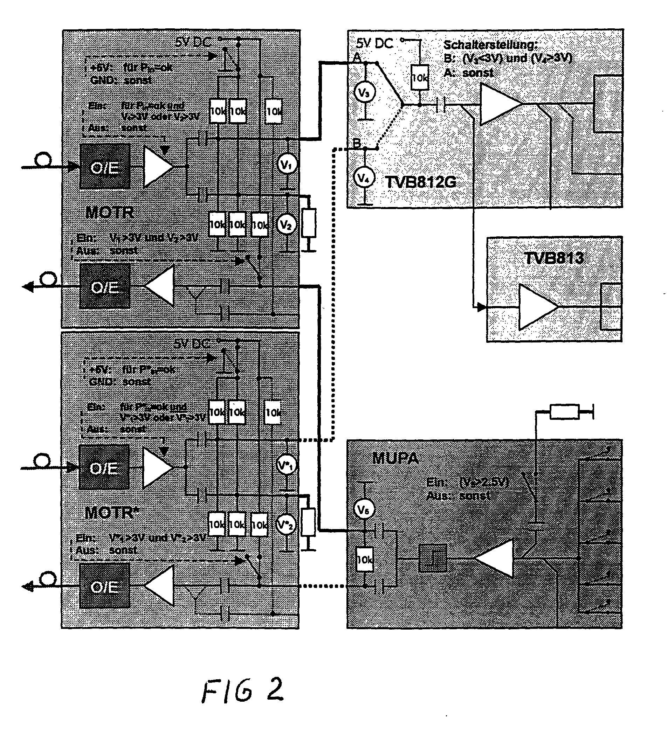

Die Erfindung ist anhand der in den Figuren 1 und 2 schematische dargestellten Ausführungsbeispielen näher erläutert.

Figur 1 zeigt eine Ansicht eines geöffneten Verstärkerpunktes für Kabelfernsehen.

Der Verstärkerpunkt besteht aus einem Gestell 1, für eine Vielzahl von Baugruppen 2. An ihrer Frontseite weisen die Baugruppen 2 nicht näher bezeichnete Ein- und Ausgänge auf, über welche die Baugruppen 2 miteinander über Koaxialkabel 3 verbunden sind. Über die Koaxialkabel 6 werden sowohl die Nutzsignale verteilt bzw. weitergeleitet, als auch Steuersignale übertragen. Der Innenleiter des Koaxialkabels 3 wird zusätzlich zur Weiterleitung von Steuersignalen zur Zustandserkennung von angeschlossenen Baugruppen benutzt.

Durch die Verwendung nur eines Koaxialkabels zur gleichzeitigen Übertragung sowohl der Nutzsignale als auch der Steuersignale wird die Übersichtlichkeit der Verbindungen der Baugruppen untereinander innerhalb des eng begrenzten Gestells erheblich verbessert.

Die Figur 2 zeigt eine Schaltung, mit welcher das Steuersignal erzeugt werden kann.

Der Sendeempfänger MOTR signalisiert, ob optische Leistung an seinem Eingang anliegt; falls ja wird der erste Schalter geschlossen, so daß an den beiden symmetrischen Ausgängen - neben dem HF-Signal - ein positives Gleichspannungspotential anliegt. Der Verstärker TVB kann somit durch Messung der Spannungen V₃ und V₄ entscheiden, welcher Eingang A oder B ein gültiges HF-Signal führt. In der Regel schaltet er auf Eingang A, nur im Fall, daß A kein HF-Signal führt (V₃ < 3V) und B ein HF-Signal führt (V₄ < 3V), wird auf Eingang B umgeschaltet.

Der Verstärker TVB signalisiert mit einem 10 kΩ - Widerstand gegen +5V den Eingang, auf den er geschaltet ist. Damit kann der Sendeempfänger MOTR durch Messung des Potentials am Ausgang (V₁ und V₂) entscheiden, ob der Verstärker TVB auf einen seiner beiden Ausgänge geschaltet ist, und er seinen Ausgangsverstärker daher einschalten muß. Nur wenn Pᵢₙ = o.K. und einer der Ausgänge durch einen Verstärker TVB angewählt wird (V₁ > 3V oder V₂ > 3V), wird der Ausgangsverstärker eingeschaltet.

Die in der Figur dargestellten Spannungsmesser und Widerstandswerte sind keine detailgetreuen Realisierungsbeschreibungen, sondern es sind symbolische Ersatzdarstellungen gegeben, um die Funktion festzulegen.

Die dargestellten Verstärkerbaugruppen sind in der Lage, die Redundanzschaltung über Gleichspannungssignale auf den Koaxialkabeln zu bewerkstelligen.

Mit Hilfe der erfindungsgemäßen Maßnahmen läßt sich beispielsweise das Netzwerkmanagement für die Frequenzerweiterung für die Frequenzbereichserweiterung im Kabelfernsehnetz auf 826 MHz und die Implementierung eines leistungsfähigen Rückkanals der BK 450 Technik vorteilhaft realisieren.

## Patentansprüche

1. Gestell, insbesondere für Kabelfernsehen, mit einer Vielzahl von Baugruppenn, deren Ein- und Ausgänge mit Kabeln zur Übertragung von Hochfrequenzsignalen und von Steuersignalen verbunden sind, **dadurch gekennzeichnet, daß** die Baugruppen (2) über die gemeinsamen Ein- und Ausgänge durch Koaxialkabel (3) verbunden sind, die sowohl Hochfrequenzsignale wie auch codierte Steuersignale führen.

2. Gestell nach Anspruch 1, **dadurch gekennzeichnet, daß** eine Gleichspannung für die Steuersignale verwendet wird und daß die Steuersignale mittels Frequenzmultiplex den Hochfrequenzsignalen zugefügt werden.

3. Gestell nach Anspruch 1 oder 2, **dadurch gekennzeichnet, daß** die Steuersignale durch unterschiedliche Gleichspannungspegel codiert sind.

4. Gestell nach einem der Ansprüche 1 bis 3, **dadurch gekennzeichnet, daß** die Baugruppen (2) Schaltungen zur Codierung der Steuersignale enthalten.

5. Gestell nach einem der Ansprüche 1 bis 4, **dadurch gekennzeichnet, daß** die Baugruppen (2) Schaltungen enthalten, welche die Hochfrequenzsignale und die Steuersignale zusammenfassen, so daß diese über gemeinsame Ein- und Ausgänge geführt werden.

6. Gestell nach einem der Ansprüche 1 bis 5, **dadurch gekennzeichnet, daß** die Steuersignale über den Innenleiter des Koaxialkabels (3) geleitet werden.
